# EUROPEAN PATENT APPLICATION

(11) **EP 2 824 734 A1**
(43) Date of publication of application: **14.01.2015**
(21) Application number: 13197809.0
(22) Date of filing: 17.12.2013
(51) Int. Cl.: H01M 4/36, H01M 4/62, H01M 4/38, H01M 4/587

(54) **Negative electrode active material for rechargeable lithium battery, method for preparing the same, and rechargeable lithium battery using the same**

(30) Priority: 12.07.2013 KR 20130082267; 01.10.2013 KR 20130117491
(71) Applicant: Posco Chemtech Co., Ltd., Gyeongsangbuk-do 790-340 (KR)
(72) Inventor: Lee, Kyoung Muk, 339-886 Sejong (KR); Lee, Heon Young, 330-250 Chungcheongnam-do (KR); Lee, Mi Ryeong, 339-854 Sejong (KR); Hyeong, Eun Byeol, 413-748 Gyeonggi-do (KR)
(74) Representative: Winter, Brandl, Fürniss, Hübner, Röss, Kaiser, Polte - Partnerschaft mbB

(57) **Abstract**

The present invention relates to a negative electrode active material for a rechargeable lithium battery, a method for preparing the same, and a rechargeable lithium battery using the same, and provides a negative electrode active material for a rechargeable lithium battery of a carbon-metal complex or a mixture type, containing a carbon-based active material including a first ceramic coating layer, a metal-based active material or a metal-base active material including a first ceramic coating layer, and a carbon-based active material.

## Description

### CROSS-REFERENCE TO RELATED APPLICATION

This application claims priority to and the benefit of Korean Patent Application Nos. 10-2013-0082267 and 10-2013-0117491 filed in the Korean Intellectual Property Office on July 2, 2013 and October 1, 2013, the entire contents of which are incorporated herein by reference.

### BACKGROUND OF THE INVENTION

### (a) Field of the Invention

The following disclosure relates to a negative electrode active material for a rechargeable lithium battery, a method for preparing the same, and a rechargeable lithium battery using the same.

### (b) Description of the Related Art

A rechargeable lithium battery has recently become prominent as a power supply in portable small electronic devices. The rechargeable lithium battery has a discharge voltage of two times higher than the existing battery using an aqueous alkaline solution by using an organic electrolyte solution. As a result, the rechargeable lithium battery provides higher energy density than the existing battery

As a positive electrode active material for the rechargeable lithium battery, an oxide formed of lithium having a structure in which intercalation of lithium ions is possible, such as LiCoO₂, LiMn₂O₄, LiNi₁₋ₓCoₓO₂ (0 < x < 1), or the like and a transition metal is mainly used.

As a negative electrode active material for the rechargeable lithium battery, various types of carbon-based materials including artificial graphite, natural graphite, and hard carbon capable of intercalating and deintercalating lithium ions have been used. The graphite among the carbon-based materials has been widely used.

However, as the portable small electronic devices are multi-functionalized, miniaturized, and lightened, the demand for the rechargeable lithium battery having high capacitance has increased. As a result, interest in a negative electrode active material having a higher theoretical capacity than that of graphite (372 mAh/g) which is used as the negative electrode active material of the rechargeable lithium battery has increased.

Particularly, silicon-based metal materials have a theoretical capacity 10 times higher than that of the graphite, and research into silicon-based metal materials having a high theoretical capacity have been actively conducted. However, the silicon-based metal material generates a crack by a change in volume due to volume expansion of a silicon particle generated during charging, and thus the cycle life characteristic of the rechargeable lithium battery is decreased due to a reduction of conductivity between the active materials, elimination from a plate, and continuous reaction of the material with the electrolyte solution, such that it has not been commercialized up to now.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a negative electrode active material for a rechargeable lithium battery having an excellent cycle life characteristic by suppressing volume expansion, and a method for preparing the same.

In addition, the present invention also provides a rechargeable lithium battery having an improved cycle life characteristic using the negative electrode active material.

An exemplary embodiment of the present invention provides a negative electrode active material for a rechargeable lithium battery of a carbon-metal composite or a mixture type, containing a carbon-based active material including a first ceramic coating layer, and a metal-based active material or a metal-base active material including a first ceramic coating layer, and a carbon-based active material.

In the negative electrode active material containing the carbon-based active material including the first ceramic coating layer and the metal-based active material, a second ceramic coating layer positioned on a surface of the metal-based active material may be further included.

In the negative electrode active material including the metal-based active material including the first ceramic coating layer and the carbon-based active material, a second ceramic coating layer positioned on a surface of the carbon-based active material may be further included.

In the carbon-based active material including the first ceramic coating layer, a low crystalline carbon coating layer may be positioned on a bottom portion of the first ceramic coating layer.

The low crystalline carbon coating layer may be positioned outside the metal-based active material.

The low crystalline carbon coating layer may be positioned outside the metal-based active material and the second ceramic coating layer may be positioned outside the low crystalline carbon coating layer.

The low crystalline carbon coating layer may be positioned outside the carbon-based active material.

The low crystalline carbon coating layer may be positioned outside the carbon-based active material and the second ceramic coating layer may be positioned outside the low crystalline carbon coating layer.

The metal-based active material may be selected from a metal selected from the group consisting of silicon, tin, aluminum, vanadium, magnesium, antimony, or at least one alloy or combination thereof, a compound selected from the group consisting of an oxide, a nitride, or a carbide of the metal, or alloys or combinations thereof.

The carbon-based active material may be a natural graphite, an artificial graphite, a soft carbon, a hard carbon, or a combination thereof.

The low crystalline carbon coating layer includes a low crystalline carbon material, the low crystalline carbon material may be petroleum-based pitch, a coal-based pitch, a mesophase pitch, heavy crude oil, light crude oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

The ceramic may be a metal oxide, a non-metal oxide, a composite metal oxide, a rare earth oxide, a compound containing a halogen, an oxide generated from a ceramic precursor, or a combination thereof.

The ceramic precursor may be zirconia, aluminum, polycarbosilane, polysiloxane, polysilazane, or a combination thereof.

The ceramic may be SiO2, Al2O3, Li2Ti5O12, TiO2, CeO2, Zr02, BaTi03, Y2O3, MgO, CuO, ZnO, AIP04, AIF, Si3N4, AIN, TiN, WC, SiC, TiC, MoSi2, Fe2O3, Ge02, Li2O, MnO, NiO, zeolite, or a combination thereof.

A content of the low crystalline carbon material may be 0.1 to 30 parts by weight based on 100 parts by weight of the active material.

An average particle diameter of the carbon-based active material may be 5 to 30 µm.

An average particle diameter of the metal-based active material may be 0.05 to 20 µm.

The first ceramic coating layer contains ceramic particles, and an average particle diameter of the ceramic particles may be 10 to 1000 nm.

The second ceramic coating layer contains ceramic particles, and the average particle diameter of the ceramic particles may be 10 to 1000 nm.

A weight ratio of the carbon-based active material including the first ceramic coating layer and the metal-based active material may be 60 to 99:1 to 40 (the carbon-based active material including the first ceramic coating layer to the metal-based active material).

A weight ratio of the metal-based active material including the first ceramic coating layer and the carbon-based active material may be 60 to 99:1 to 40(the metal-based active material including the first ceramic coating layer to the carbon-based active material).

Another exemplary embodiment of the present invention provides a method for preparing a negative electrode active material for a rechargeable lithium battery, including: preparing a carbon-based active material and a metal-based active material; coating a surface of each of the carbon-based active material and the metal-based active material with a low crystalline carbon material to form a low crystalline carbon coating layer thereon; forming a first ceramic coating layer on the surface of the carbon-based active material or the metal-based active material on which the low crystalline carbon coating layer is formed; mixing the carbon-based active material or the metal-based active material on which the first ceramic coating layer is formed and the carbon-based active material or the metal-based active material on which the low crystalline carbon coating layer is formed; and obtaining a negative electrode active material for a rechargeable lithium battery of a carbon-metal complex or mixture type containing the carbon-based active material including the first ceramic coating layer, and the metal-based active material on which the low crystalline carbon coating layer is formed, or the metal-based active material including the first ceramic coating layer, and the carbon-based active material on which the low crystalline carbon coating layer is formed.

Between the forming of the first ceramic coating layer on the surface of the carbon-based active material or the metal-based active material on which the low crystalline carbon coating layer is formed and the mixing of the carbon-based active material or the metal-based active material on which the first ceramic coating layer is formed and the carbon-based active material or the metal-based active material on which the low crystalline carbon coating layer is formed, forming a second ceramic coating layer on the surface of the metal-based active material or the carbon-based active material on which the low crystalline carbon coating layer is formed may be further included.

The coating of the surface of each of the carbon-based active material and the metal-based active material with the low crystalline carbon material to form the low crystalline carbon coating layer thereon includes mixing the low crystalline carbon material with each active material, and may include performing a mechanical mixing method at a speed of 500 to 3000 rpm.

The coating of the surface of each of the carbon-based active material and the metal-based active material with the low crystalline carbon material to form the low crystalline carbon coating layer thereon may include performing a heat treatment process under an atmosphere of hydrogen, nitrogen, argon, or a mixed gas thereof.

The coating of the surface of each of the carbon-based active material and the metal-based active material with the low crystalline carbon material to form the low crystalline carbon coating layer thereon may include performing the heat treatment process at 600 to 1500 °C.

The forming of the first ceramic coating layer on the surface of the carbon-based active material or the metal-based active material on which the low crystalline carbon coating layer is formed includes using the mechanical mixing method, and the mechanical mixing method may be performed by any one among ball milling, mechanofusion milling, shaker milling, planetary milling, attritor milling, disk milling, shape milling, nauta milling, nobilta milling, high speed mixing, or a combination thereof.

The mechanical mixing method may be performed at a speed of 500 to 7000 rpm.

The mixing of the carbon-based active material or the metal-based active material on which the first ceramic coating layer is formed and the carbon-based active material or the metal-based active material on which the low crystalline carbon coating layer is formed may be performed by any one among ball milling, mechanofusion milling, shaker milling, planetary milling, attritor milling, shape milling, nauta milling, nobilta milling, high speed mixing, paddle mixing, ribbon mixing, henschel mixing, corn type mixing, thinky mixing, homo mixing, agitator mixing, or a combination thereof.

The mixing of the carbon-based active material or the metal-based active material on which the first ceramic coating layer is formed and the carbon-based active material or the metal-based active material on which the low crystalline carbon coating layer is formed may be performed at a speed of 100 to 2000 rpm.

Yet another exemplary embodiment of the present invention provides a rechargeable lithium battery including an electrode including an electrode active material for the rechargeable lithium battery according to the exemplary embodiment of the present invention described above, and an electrolyte.

Specific matters of other exemplary embodiments of the present invention will be included in the detailed description below.

The rechargeable lithium battery having an excellent cycle life characteristic can be implemented by suppressing the volume expansion of the negative electrode active material.

### BRIEF DESCRIPTION OF THE DRAWINGS

FIG. 1 is an exploded perspective view of a rechargeable lithium battery according to an exemplary embodiment of the present invention.
FIG. 2 is a graph showing a capacity retention rate for a charge/discharge cycle life of a rechargeable lithium battery manufactured according to Example 1, Example 2, and Comparative Example 1.
FIG. 3A is a scanning electron microscope (SEM) photograph showing a cross-section of a negative electrode prepared with a negative electrode active material according to Comparative Example 1.
FIG. 3B is a scanning electron microscope (SEM) photograph showing a cross-section of a negative electrode in a state in which the charging is completed by charging and discharging a negative electrode prepared with a negative electrode active material according to Comparative Example 1.
FIG. 4A is a scanning electron microscope (SEM) photograph showing a cross-section of a negative electrode prepared with a negative electrode active material according to Example 2.
FIG. 4B is a scanning electron microscope (SEM) photograph showing a cross-section of a negative electrode in a state in which the charging is completed by charging and discharging a negative electrode prepared with a negative electrode active material according to Example 2.
FIG. 5A is a scanning electron microscope (SEM) photograph showing a cross-section of a negative electrode prepared with a negative electrode active material according to Example 3.
FIG. 5B is a scanning electron microscope (SEM) photograph showing a cross-section of a negative electrode in a state in which the charging is completed by charging and discharging a negative electrode prepared with a negative electrode active material according to Example 3.
FIG. 6 is a graph showing charge/discharge curved lines of 3 initial cycles for a rechargeable lithium battery manufactured according to Example 3 and Comparative Example 1.

### DETAILED DESCRIPTION OF THE EMBODIMENTS

Hereinafter, embodiments of the present invention will be described in detail. However, the embodiments are described for illustrative purpose, but the present invention is not limited thereto. Therefore, the present invention will be defined by the scope of the appended claims to be described below.

An exemplary embodiment of the present invention provides a negative electrode active material for a rechargeable lithium battery of a carbon-metal complex or a mixture type, containing: a carbon-based active material including a first ceramic coating layer; a metal-based active material or a metal-based active material including a first ceramic coating layer; and a carbon-based active material.

Selectively, a second ceramic coating layer positioned on a surface of the metal-based active material may be further included. In addition, a second ceramic coating layer positioned on a surface of the carbon-based active material may be further included. That is, the ceramic coating layer may be formed on a surface of each of the active materials. The first ceramic coating layer may be similar to the second ceramic coating layer in view of a manufacturing method and a configuration component.

In more detail, the negative electrode active material according to the exemplary embodiment of the present invention includes the carbon-based active material and the metal-based active material, the first ceramic coating layer may be coated on the surface of either one among these, and the second ceramic coating layer may be optionally coated on the surface of the remaining one. However, the configuration of the second ceramic coating layer may not necessarily be required.

A weight ratio of the carbon-based active material including the first ceramic coating layer and the metal-based active material may be 60 to 99:1 to 40 (the carbon-based active material including the first ceramic coating layer to the metal-based active material).

In addition, a weight ratio of the metal-based active material including the first ceramic coating layer and the carbon-based active material may be 60 to 99:1 to 40 (the metal-based active material including the first ceramic coating layer to the carbon-based active material).

In the case in which the range is satisfied, it is possible to minimize particle damage and maintain electrical conductivity at the time of charging and discharging. Therefore, a high-capacity and long cycle life of the rechargeable battery may be implemented.

The metal-based active material may be selected from a metal selected from the group consisting of silicon, tin, aluminum, vanadium, magnesium, antimony, or at least one combination or alloy thereof; a compound selected from a group consisting of an oxide, a nitride, or a carbide of the metal; or a combination thereof. In detail, the metal-based active material may be Si, SiOx, a Si-C complex, or a Si-Q alloy, where x may be an integer within the range satisfying the following equation 0<x<2, Q may be an alkali metal, alkaline earth metals, group 13 to 16 group elements, transition metals, rare earths elements, or combination thereof, and Si is not an option. As a specific element of Q, there is Ti, V, Al, Sn, or a combination thereof. The most preferable metal-based active material may be Si or SiOx (0.1≤x≤2) which is an oxide thereof.

The carbon-based active material may be natural graphite, artificial graphite, a soft carbon, a hard carbon, or combination thereof, and in detail, graphite-base material such as the natural graphite, the artificial graphite, and the like.

The carbon-based active material and/or the metal-based active material may be coated with a low crystalline carbon material on a surface thereof prior to forming the first ceramic coating layer.

Therefore, the low crystalline carbon coating layer may be positioned outside the metal-based active material, and the second ceramic coating layer may be positioned outside the low crystalline carbon coating layer. In addition, the low crystalline carbon coating layer may be positioned outside the carbon-based active material and the second ceramic coating layer may be positioned outside the low crystalline carbon coating layer.

In the case in which the surface is coated with the low crystalline carbon material, the carbon-base active material may reduce a non-reversible reaction suppressing a side reaction in the electrolyte, and the metal-based active material may improve the electrical conductivity between the active material particles by the low crystalline carbon material and electrochemical characteristics of the electrolyte and reduce the volume expansion.

The low crystalline carbon material may be petroleum-based pitch, coal-based pitch, mesophase pitch, heavy crude oil, light crude oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

In detail, the low crystalline carbon material may be petroleum-based pitch, coal-based pitch, phenol resin, heavy crude oil, light crude oil, or a combination thereof, in more detail, it may be petroleum-based pitch, coal-based pitch or combination thereof. A content of the low crystalline carbon material may be 0.1 to 30 parts by weight based on 100 parts by weight of the active material. In the case in which an amorphous carbon is included within the range, the side reaction is reduced and the electrical conductivity is improved, such that the rechargeable lithium battery has an excellent cycle life characteristic.

The rechargeable lithium battery forms the first ceramic coating layer on the carbon-based active material, thereby maintaining the high capacity and improving the cycle life characteristic. The first ceramic coating layer is uniformly coated on the surface of the active material to form a hard coating film. The coating film suppresses the expansion and shrinkage of the carbon-based active material generated at the time of charging and discharging, thereby reducing destruction and deformation of the electrode due to the volume expansion.

In addition, the rechargeable lithium battery forms the first ceramic coating layer on the metal-based active material, thereby maintaining the high capacity and improving the cycle life characteristic. The active material forming the first ceramic coating layer may be optionally applied according to a desired effect.

In addition, the first ceramic coating layer has surface roughness, such that even when the expansion and shrinkage are generated at the time of charging and discharging, the cycle life characteristic of the battery may be maintained by improving the contact force between the particles.

The ceramic may be a metal oxide, a non-metal oxide, a complex metal oxide, a rare earth oxide, a compound containing halogens, an oxide generated from a ceramic precursor, or a combination thereof.

The ceramic may be SiO2, Al2O3, Li2Ti5O12, TiO2, CeO2, ZrO2, BaTi03, Y2O3, MgO, CuO, ZnO, AlPO4, AIF, Si3N4, AIN, TiN, WC, SiC, TiC, MoSi2, Fe2O3, GeO2, Li2O, MnO, NiO, zeolite, or a combination thereof.

The ceramic precursor may be zirconia, aluminum, polycarbosilane, polysiloxane, polysilazane, or a combination thereof.

A content of the ceramic may be 0.1 to 10 parts by weight based on 100 parts by weight of the active material. When the ceramic is included within the range, it may form a uniform coating layer, and the cycle life characteristic of the battery may be improved by effectively maintaining the volume expansion alleviation, whereas when the ceramic is out of the range, the cycle life characteristic of the battery may be deteriorated due to a reduction in capacity caused by the ceramic and the other side reactions.

An average particle diameter of the carbon-based active material may be 5 to 30 µm. In addition, an average particle diameter of the metal-based active material may be 0.05 to 20 µm. However, it is not limited thereto.

In addition, the first ceramic coating layer or the second ceramic coating layer contain ceramic particles and the average particle diameter of the ceramic particles may be 10 to 1000 nm.

Another exemplary embodiment of the present invention provides a method for preparing of a negative electrode active material for a rechargeable lithium battery, including: preparing a carbon-based active material and a metal-based active material; coating a surface of each of the carbon-based active material and the metal-based active material with a low crystalline carbon material to form a low crystalline carbon coating layer thereon; forming a first ceramic coating layer on the surface of the carbon-based active material or the metal-based active material on which the low crystalline carbon coating layer is formed; mixing the carbon-based active material or the metal-based active material on which the first ceramic coating layer is formed and the carbon-based active material or the metal-based active material on which the low crystalline carbon coating layer is formed; and obtaining a negative electrode active material for a rechargeable lithium battery of a carbon-metal complex or a mixture type containing the carbon-based active material including the first ceramic coating layer, the metal-based active material on which the low crystalline carbon coating layer is formed or the metal-based active material including the first ceramic coating layer, and the carbon-based active material on which the low crystalline carbon coating layer is formed.

Between the forming of the first ceramic coating layer on the surface of the carbon-based active material or the metal-based active material on which the low crystalline carbon coating layer is formed, the mixing of the carbon-based active material or the metal-based active material on which the first ceramic coating layer is formed, and the carbon-based active material or the metal-based active material on which the low crystalline carbon coating layer is formed, forming a second ceramic coating layer on the surface of the metal-based active material or the carbon-based active material on which the low crystalline carbon coating layer is formed may be further included.

The coating the surface of each of the carbon-based active material and the metal-based active material with the low crystalline carbon material to form the low crystalline carbon coating layer thereon may be performed at a speed of 500 to 3000 rpm. The processing of the surface may be performed under an atmosphere of hydrogen, nitrogen, argon, or a mixed gas thereof at the time of performing the heat treatment. The processing of the surface may be performed at a temperature of 600 to 1500 °C at the time of performing the heat treatment. In the range, the surface of each of the carbon-based active material and the metal-based active material may be efficiently processed with the low crystalline carbon material.

The coating of the ceramic using the mechanical mixing method may be performed by any one among ball milling, mechanofusion milling, shaker milling, planetary milling, attritor milling, disk milling, shape milling, nauta milling, nobilta milling, high speed mixing, or a combination thereof.

The mechanical mixing method may be performed at a speed of 500 to 7000 rpm. The range is suitable for efficiently forming the first ceramic coating layer.

The mixing of the carbon-based active material or the metal-based active material on which the first ceramic coating layer is formed and the carbon-based active material or the metal-based active material on which the low crystalline carbon coating layer is formed may be performed by any one among ball milling, mechanofusion milling, shaker milling, planetary milling, attritor milling, shape milling, nauta milling, nobilta milling, high speed mixing, paddle mixing, ribbon mixing, henschel mixing, corn-type mixing, thinky mixing, homo mixing, agitator mixing, or a combination thereof.

The method may be performed at a speed of 100 to 2000 rpm, in detail, 300 to 1000 rpm. In case of mixing in the range, a fissures and breakage of the particle are not generated, thereby obtaining a uniform composite and mixture.

Yet another exemplary embodiment of the present invention provides a rechargeable lithium battery including: a negative electrode including the negative electrode active material that is prepared according to the preparing method of the negative electrode active material for the rechargeable lithium battery; a positive electrode including the positive electrode active material; optionally a separator that is present between the negative electrode and the positive electrode; and an electrolyte.

The rechargeable lithium battery may be classified into a lithium ion battery, a lithium ion polymer battery, and a lithium polymer battery according to a kind of the separator and the electrolyte used in the battery, into a cylindrical shape, a square shape, a coin shape, a pouch shape, and the like according to a shape, and may be divided into a bulk type and a thin film type according to a size. The structure and manufacturing method of the battery are well known in the art and the detailed description thereof will be omitted.

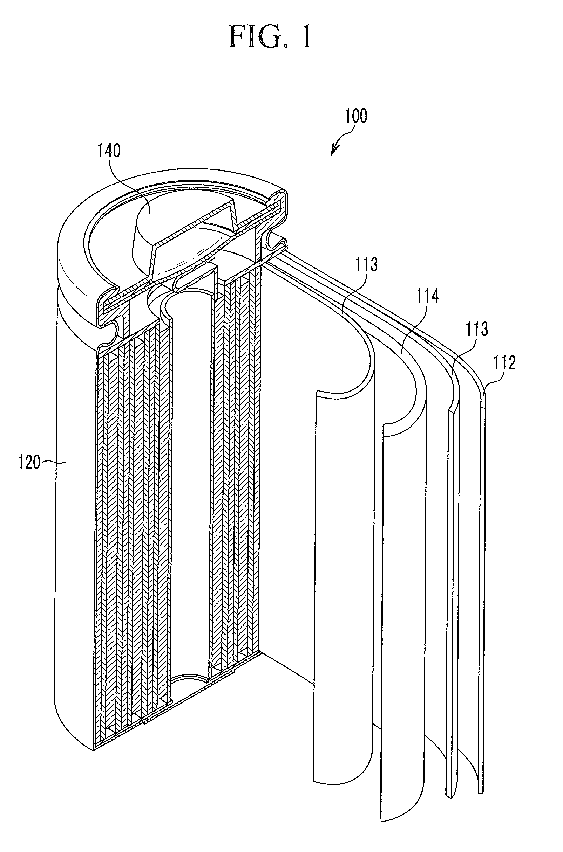

FIG. 1 is an exploded perspective view of a rechargeable lithium battery according to an exemplary embodiment of the present invention. Referring to FIG. 1, the rechargeable lithium battery 100 is formed in a cylindrical shape, and is mainly configured to include a negative electrode 112, a positive electrode 114 and a separator 113 disposed between the negative electrode 112 and the positive electrode 114, an electrolyte (not shown) impregnated into the negative electrode 112, the positive electrode 114, and the separator 113, a battery container 120, and a sealing member 140 sealing the battery container 120. The rechargeable lithium battery 100 that is sequentially stacked with a structure of the negative electrode 112, the separator 113, and the positive electrode 114 and then is wound in a spiral shape is received in the battery container 120.

The negative electrode includes a current collector and a negative electrode active material layer formed on the current collector, and the negative electrode active material layer includes the negative electrode active material.

The negative electrode active material is as described before.

The negative electrode active material layer also includes binder, and may further optionally include a conductive material.

The binder may serve to attach the negative electrode active material particles to each other and attach the negative electrode active material to the current collector. As a typical example, polyvinyl alcohol, carboxy methyl cellulose, hydroxypropyl cellulose, polyvinyl chloride, carboxylated polyvinyl chloride, polyvinylidene fluoride, polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like may be used, but is not limited thereto.

The conductive material is used in order to give conductivity to the electrode, and may be any material as long as the electronic conductive material does not trigger a chemical change in the battery configured according to the method. For example, the conductive material may be a conductive material containing a carbon-based material such as natural graphite, artificial graphite, carbon black, acetylene black, ketjen black, carbon fiber, or the like; a metal powder such as copper, nickel, aluminum, silver, or the like; or a mixture thereof.

As the current collector, a copper thin film, a nickel thin film, a stainless steel thin film, a titanium thin film, a nickel foam, a copper foam, a polymer basic material coated with a conductive metal, or combination thereof may be used.

The positive electrode includes the current collector and the positive electrode active material layer formed on the current collector.

As the positive electrode active material, a compound (lithiated intercalation compound) capable of reversibly intercalating and deintercalating lithium ions may be used. In detail, the positive electrode active material may use at least one composite oxide formed of a metal such as cobalt, manganese, nickel, or a combination thereof and the lithium. As a detailed example, a compound represented by any one of the following chemical formulas may be used. LiₐA_{1-b}R_{b}D₂ wherein 0.90 ≤ a ≤ 1.8 and 0 ≤ b ≤ 0.5; LiₐE_{1-b}R_{b}O_{2-c}D_{c} wherein 0.90 ≤ a ≤ 1.8, 0 ≤ b ≤ 0.5, and 0 ≤ c ≤ 0.05; LiE_{2-b}R_{b}O_{4-c}D_{c} wherein 0 ≤ b ≤ 0.5, 0 ≤ c ≤ 0.05; LiₐNi_{1-b-c}Co_{b}R_{c}D_{α} wherein 0.90 ≤ a ≤ 1.8, 0 ≤ b ≤ 0.5, 0 ≤ c ≤ 0.05, and 0 < α ≤ 2; LiₐNi_{1-b-c}Co_{b}R_{c}O_{2-α}Z_{α} wherein 0.90 ≤ a ≤ 1.8, 0 ≤ b ≤ 0.5, 0 ≤ c ≤ 0.05, and 0 < α < 2; LiₐNi_{1-b-c}Co_{b}R_{c}O₂-_{α}Z₂ wherein 0.90 ≤ a ≤ 1.8, 0 ≤ b ≤ 0.5, 0 ≤ c ≤ 0.05, and 0 < α < 2; LiₐNi_{1-b-c}Mn_{b}R_{c}D_{α} wherein 0.90 ≤ a ≤ 1.8, 0 ≤ b ≤ 0.5, 0 ≤ c ≤ 0.05, and 0 < α ≤ 2; LiₐNi_{1-b-c}Mn_{b}R_{c}O_{2-α}Z_{α} wherein 0.90 ≤ a ≤ 1.8, 0 ≤ b ≤ 0.5, 0 ≤ c ≤ 0.05, and 0 < α < 2; LiₐNi_{1-b-c}Mn_{b}R_{c}O_{2-α}Z₂ wherein 0.90 ≤ a ≤ 1.8, 0 ≤ b ≤ 0.5, 0 ≤ c ≤ 0.05, and 0 < α < 2; LiₐNi_{b}E_{c}G_{d}O₂ wherein 0.90 ≤ a ≤ 1.8, 0 ≤ b ≤ 0.9, 0 ≤ c ≤ 0.5, and 0.001 ≤ d ≤ 0.1; LiₐNi_{b}Co_{c}Mn_{d}GeO₂ wherein 0.90 ≤ a ≤ 1.8, 0 ≤ b ≤ 0.9, 0 ≤ c ≤ 0.5, 0 ≤ d ≤ 0.5, and 0.001 ≤ e ≤ 0.1; LiₐNiG_{b}O₂ wherein 0.90 ≤ a ≤ 1.8 and 0.001 ≤ b ≤ 0.1; LiₐCoG_{b}O₂ wherein 0.90 ≤ a ≤ 1.8 and 0.001 ≤ b ≤ 0.1; LiₐMnG_{b}O₂ wherein 0.90 ≤ a ≤ 1.8 and 0.001 ≤ b ≤ 0.1; LiₐMn₂G_{b}O₄ wherein 0.90 ≤ a ≤ 1.8 and 0.001 ≤ b ≤ 0.1; QO₂; QS₂; LiQS₂; V₂O₅; LiV₂O₅; LiTO₂; LiNiVO₄; Li_{(3-f)}J₂(PO4)₃ (0 ≤ f ≤ 2); Li(₃-_{f})Fe₂(PO₄)₃ (0 ≤ f ≤ 2); and LiFePO₄.

In those chemical formulae, A is selected from Ni, Co, Mn, and a combination thereof; R is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; Z is selected from F, S, P, and a combination thereof; G is selected from Al, Cr, Mn, Fe, Mg, La, Ce, Sr, V, and a combination thereof; Q is selected from Ti, Mo, Mn, and a combination thereof; T is selected from Cr, V, Fe, Sc, Y, and a combination thereof; and J is selected from V, Cr, Mn, Co, Ni, Cu, and a combination thereof.

The positive active material may include a positive active material with a coating layer, or a compound of the active material and the active material coated with the coating layer. The coating layer may include at least one coating element compound selected from the group consisting of an oxide and a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be one selected from Mg, Al, Co, K, Na, Ca, Si, Ti, V, Sn, Ge, Ga, B, As, Zr, and a combination thereof. The coating process may include any conventional processes as long as it does not cause any side effects on the properties of the positive electrode active material (e.g., spray coating, immersing), which is well known to persons having ordinary skill in this art, so a detailed description thereof is omitted.

The positive electrode active material layer may also include a binder and a conductive material.

The binder improves binding properties of the positive electrode active material particles to each other and to a current collector. Examples of the binder include at least one selected from polyvinylalcohol, carboxymethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used in order to give conductivity to the positive electrode. Any electrically conductive material can be used as a conductive agent unless it causes a chemical change. Examples of the conductive material include natural graphite, artificial graphite, carbon black, acetylene black, ketjen black, a carbon fiber, a metal powder, or a metal fiber of copper, nickel, aluminum, silver, and the like; or at least one conductive polymer such as a polyphenylene derivative or a mixture thereof.

The current collector may include Al, but is not limited thereto.

The active material composition is prepared by mixing the active material, the conductive material, and the binding agent with the solvent, and each of the negative electrode and the positive electrode is prepared by applying the composition to the current collector. The method for preparing the electrode as described above is well-known to those skilled in the art. Therefore, a detailed description thereof in the specification will be omitted. As the solvent, N-methylpyrrolidone, distilled water, or the like may be used, but the solvent is not limited thereto.

The electrolyte includes a non-aqueous organic solvent and a lithium salt.

The non-aqueous organic solvent serves as a medium capable of moving the ions concerned in the electrochemical reaction of the battery.

The non-aqueous organic solvent may further include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, 1,1-dimethylethyl acetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent may include cyclohexanone, and the like. In addition, the alcohol-based solvent may include ethyl alcohol, isopropyl alcohol, and the like. The aprotic solvent may include nitriles such as R-CN (R is a C2 to C20 linear, branched, or cyclic hydrocarbon group including a double bond, an aromatic ring, or an ether bond), amides such as dimethyl formamide and the like, dioxolanes such as 1,3-dioxolane and the like, or sulfolanes and the like.

The non-aqueous organic solvent may be used alone or in combination of one or more solvents. The mixing ratio of the organic solvents used by mixing the one or more solvents may be controlled in accordance with the desired performance of a battery, which would be understood by the skilled person in the art.

In addition, the carbonate-based solvent may include a mixture of a cyclic carbonate and a chain carbonate. The cyclic carbonate and the chain carbonate may be mixed together in a volume ratio of about 1:1 to about 1:9, and the electrolyte solution may have enhanced performance.

The non-aqueous organic solvent may be prepared by further adding an aromatic hydrocarbon-based solvent to the carbonate-based solvent. In this case, the carbonate-based solvent and the aromatic hydrocarbon-based solvent are mixed together in a volume ratio of about 1:1 to about 30:1.

The aromatic hydrocarbon-based organic solvent may be an aromatic hydrocarbon-based compound represented by the following Chemical Formula 1.

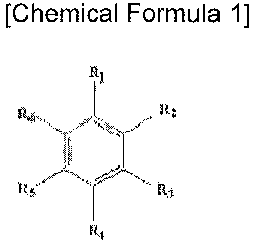

In Chemical Formula 1, R₁ to R₆ are each independently hydrogen, a halogen, a C1 to C10 alkyl group, a C1 to C10 haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate or an ethylene carbonate-based compound represented by the following Chemical Formula 2 as an additive to improve battery cycle-life.

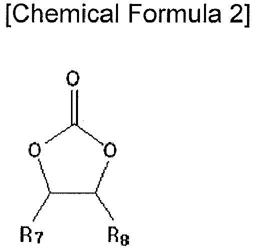

In Chemical Formula 2, R₇ and R₈ are each independently hydrogen, a halogen group, a cyano group (CN), a nitro group (NO₂), or a C1 to C5 fluoroalkyl group, provided that at least one of R₇ and R₈ is a halogen group, a cyano group (CN), a nitro group (NO₂), or a C1 to C5 fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. When the vinylene carbonate or the ethylene carbonate-based compound is further used, use amounts thereof may be adjusted within an appropriate range, thereby improving battery cycle-life.

The lithium salt melts in the non-aqueous organic solvent, so it is possible to operate the basic rechargeable lithium battery by applying is as the lithium ion source within the battery. The lithium salt serves to promote the movement of the lithium ions between the positive electrode and the negative electrode. The lithium salt may be LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(CyF_{2y+1}SO₂) (where x and y are natural numbers), LiCl, Lil, LiB(C₂O₄)₂ (lithium bis(oxalato) borate: LiBOB) or a combination thereof, and these are included as supporting electrolytic salts. The concentration of the lithium salt may be used within the range of 0.1 to 2.0 M. When the concentration of the lithium salt is included in the range, the electrolyte has suitable conductivity and viscosity, thereby obtaining excellent electrolyte performance, and thus the lithium ions may effectively move.

The separator 113 serves to electrically isolate the negative electrode 112 and the positive electrode 114 from each other and provide a moving path for the lithium ions. Any separator may be used as long as the separator is generally used in the rechargeable lithium battery. That is, the separator having excellent wetting performance while having low resistance for the ion movement of the electrolyte may be used. For example, the separator may be any one selected from a glass fiber, polyester, teflon, polyethylene, polypropylene, polytetrafluoroethylene (PTFE), and combination thereof, and may also be non-woven fabric or woven fabric type. For example, a polyolefin polymer separator such as polyethylene, polypropylene, or the like is mainly used in the lithium ion battery. Meanwhile, the separator coated with ceramic component or polymer material in order to secure mechanical strength or heat resistance may be used, optionally in a single-layer or multi-layer structure.

Hereinafter, examples and comparative examples of the present invention will be described. However, this is only one example of the present invention and the present invention is not limited thereto.

### Example 1

### (Preparation of a negative electrode active material composition for a rechargeable lithium battery)

Natural graphite with the surface coated with a low crystalline carbon material (an average particle size (D₅₀): 16 µm)(PAS-CP3, Poscochemtech) and an Al₂O₃ ceramic (an average particle size (D₅₀): 30 nm) mixed at a weight ratio of 100:3, and by using a mechanical mixing method at a speed of 2000 rpm for 20 minutes in a high-speed agitator to thereby prepare a carbon-based active material on which the ceramic is coated.

Thereafter, the carbon-based active material on which the prepared ceramic is coated and SiOx-C which is the metal-based active material in which the low crystalline carbon material is included mixed at a mass ratio of 95:5 (the carbon-based active material on which the prepared ceramic is coated and SiOx-C which is the metal-based active material in which the low crystalline carbon material is included) by using the agitator.

### (Preparation of negative electrode)

The prepared negative electrode active material, styrene-butadiene rubber (SBR) as a binder, and carboxy methyl cellulose (CMC) as a thickener were mixed at a mass ratio of 96.5:1.5:2, and then dispersed in distilled water with ions removed to thereby prepare the negative electrode active material layer composition.

After the composition was coated on a Cu-foil current collector, it was by dried and pressed to thereby prepare a negative electrode having electrode density of 1.60±0.05 g/cm3.

### (Manufacture of lithium rechargeable battery)

The negative electrode was used as an operation electrode and the lithium metal was used as a counter electrode to manufacture a half-cell battery (2032-type coin cell)

In this case, a separator made of a porous polypropylene film was inserted between the working electrode and the counter electrode, and an electrolyte solution in which LiPF₆ at a 1 M concentration was melted in solution of which ethyl methyl carbonate (EMC) and ethylene carbonate (EC) were mixed at a mixing volume ratio of 7:3 were used.

### Example 2

Example 2 prepared a negative electrode active material and a negative electrode by the same method as Example 1, except that it used TiO₂ instead of Al₂O₃ to manufacture a rechargeable lithium battery.

### Example 3

SiOx-C which is metal-based active material and a SiO₂ ceramic were mixed at a weight ratio of 100:2, and then mixed at a speed of 2000 rpm for 20 minutes using a mechanical mixing method in a high-speed agitator to thereby prepare a negative electrode active material on which the ceramic was coated.

Example 3 prepared the negative electrode and the rechargeable lithium battery by the same method as Example 1, except that the natural graphite of which the surface was coated with the low crystalline carbon material and the metal-based active material of which the surface was coated with the ceramic were mixed at a mass ratio of 95:5 (the natural graphite of which the surface is coated with the low crystalline carbon material to the metal-based active material of which the surface is coated with the ceramic) using the agitator.

### Comparative Example 1

Natural graphite having an average particle size (D₅₀) of 16 µm and petroleum based pitch were mixed at a weight ratio of 100:4.5 by using a mechanical mixing method at a speed of 2200 rpm for 10 minutes in a high-speed agitator to thereby prepare a uniform mixture.

Heat treatment was performed at 1100 °C for 5 hours under a nitrogen atmosphere after injecting the uniform mixture into a container, and then classification was performed into 45 µm to thereby prepare a negative electrode active material composition containing spherical natural graphite coated with the carbon precursor.

Comparative Example 1 prepared a negative electrode by the same method as Example 1, except that it used the negative electrode active material composition to manufacture a rechargeable lithium battery.

### Experimental Example

### Evaluation 1: evaluation on a charge/discharge cycle life characteristic of a rechargeable lithium battery

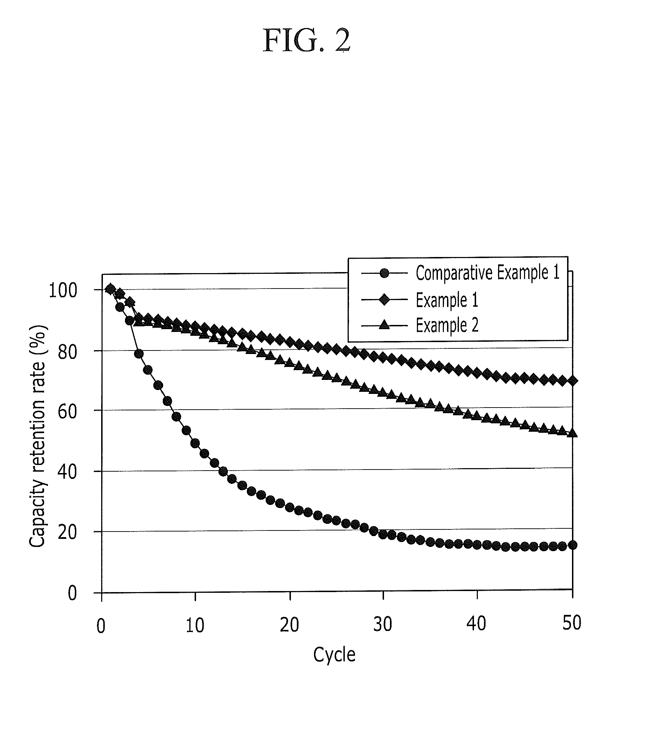

The rechargeable lithium batteries manufactured according to Examples 1 and 2 and Comparative Example 1 had the cutoff voltage set to 0.005 V (0.01 C), and were subjected to charge at a 0.5 C rate with a CC-CV mode and discharge at a 0.5 C rate up to 1.5 V with a CC mode. Thereafter, the cycle was repeated 50 times by repeating the charging and discharging to measure the capacity retention rate of the rechargeable lithium battery. The results are shown in Table 1 and FIG. 2.

FIG. 2 is a graph showing a capacity retention rate for a charge/discharge cycle life of a rechargeable lithium battery manufactured according to Example 1, Example 2, and Comparative Example 1.

Referring to Table 1 and FIG. 2, it may be confirmed that the rechargeable lithium batteries according to Examples 1 and 2 have higher capacity retention rates than the rechargeable lithium battery according to Comparative Example 1 when repeating cycles.

**[Table 1]**

| | 50 times charge and discharge capacity retention rate (%) |
|---|---|
| Example 1 | 68.7 |
| Example 2 | 51.3 |
| Comparative Example1 | 14.4 |

### Evaluation 2: evaluation of a thickness expansion characteristic of a negative electrode

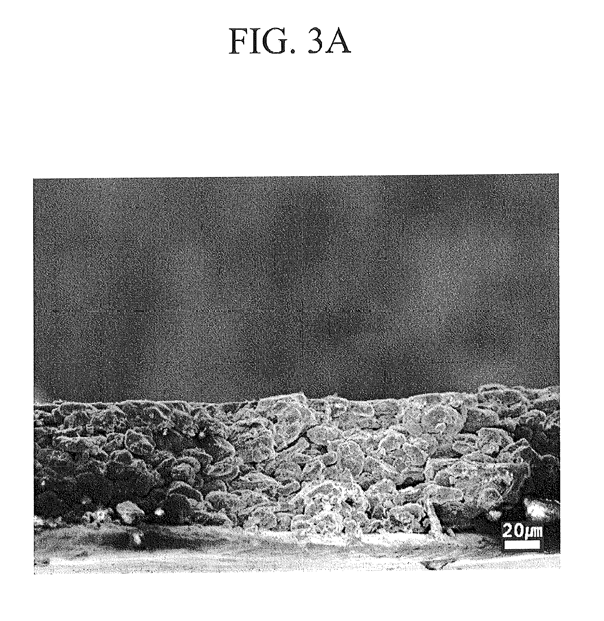

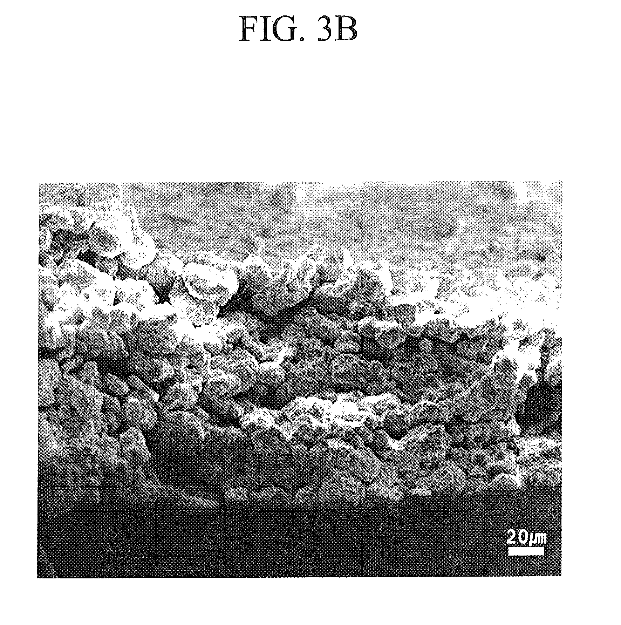

The rechargeable lithium batteries were manufactured according to Examples 1, 2 and 3 and Comparative Example 1. Here, each of the rechargeable lithium batteries was charged and discharged 3 times at a 0.1 C rate, and then recharged, such that the battery where the charging is completed was decomposed. After recovering the negative electrode from the decomposed battery, cleaning was performed using diethyl carbonate (DEC), and then drying was performed. The evaluation of the thickness expansion characteristic after charging and discharging of the negative electrode was performed, and the results are shown in Table 2 and FIGS. 3, 4, and 5.

**[Table 2]**

| | Negative electrode thickness expansion ratio (%) |
|---|---|
| Example 1 | 43.2 |
| Example 2 | 47.3 |
| Example 3 | 36.8 |
| Comparative Example 1 | 78.9 |

FIG. 3A is a scanning electron microscope (SEM) photograph showing a cross-section of a negative electrode prepared with a negative electrode active material according to Comparative Example 1.

FIG. 3B is a scanning electron microscope (SEM) photograph showing a cross-section of a negative electrode in a state in which the charging is completed by charging and discharging a negative electrode prepared with a negative electrode active material according to Comparative Example 1.

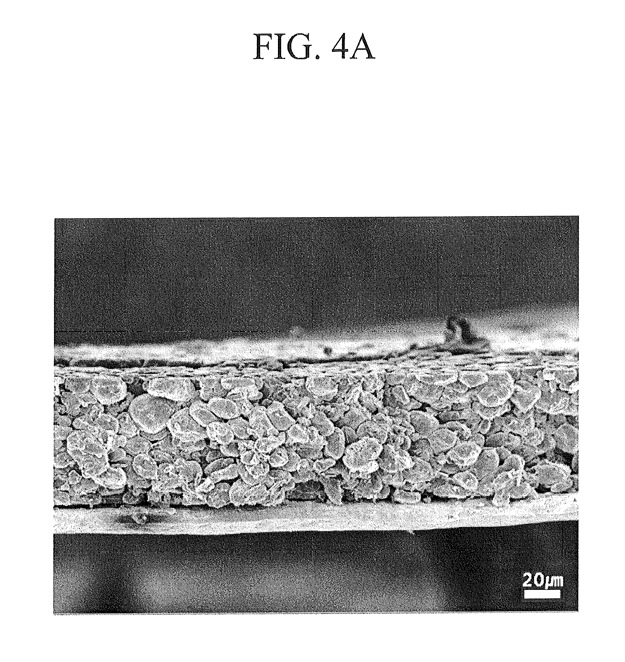

FIG. 4A is a scanning electron microscope (SEM) photograph showing a cross-section of a negative electrode prepared with a negative electrode active material according to Example 2.

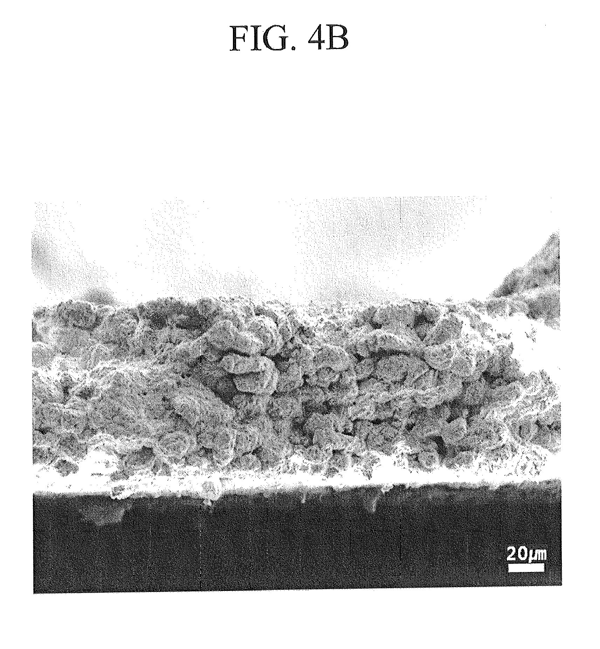

FIG. 4B is a scanning electron microscope (SEM) photograph showing a cross-section of a negative electrode in a state in which the charging is completed by charging and discharging a negative electrode prepared with a negative electrode active material according to Example 2.

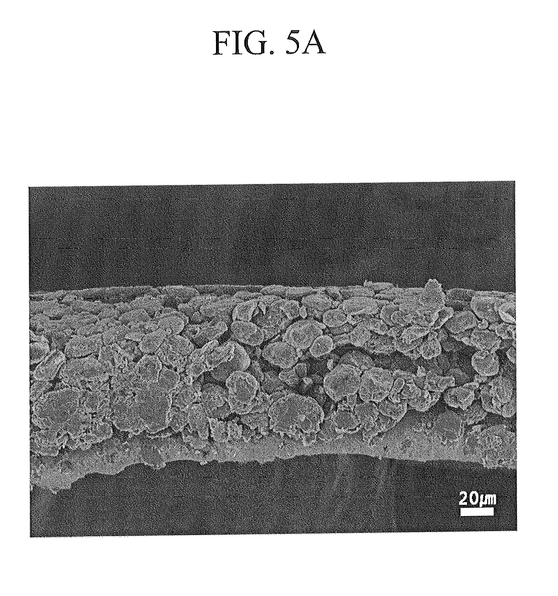

FIG. 5A is a scanning electron microscope (SEM) photograph showing a cross-section of a negative electrode prepared with a negative electrode active material according to Example 3.

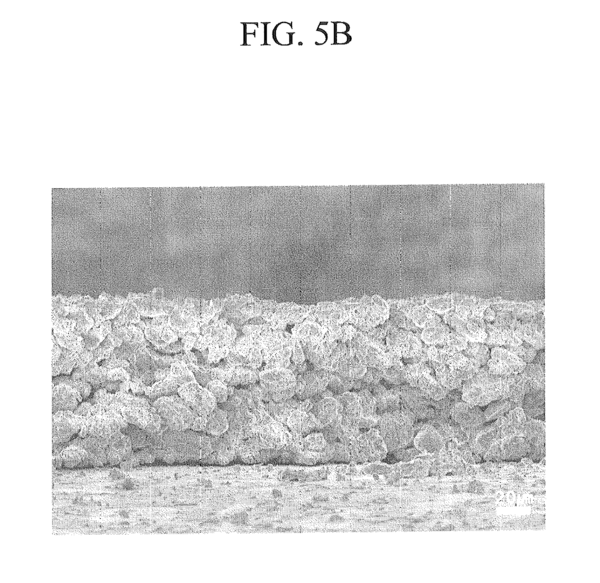

FIG. 5B is a scanning electron microscope (SEM) photograph showing a cross-section of a negative electrode in a state in which the charging is completed by charging and discharging a negative electrode prepared with a negative electrode active material according to Example 3.

Referring to Table 2 and FIGS. 3, 4 and 5, it may be confirmed that a thickness variation thereof is reduced in the negative electrode according to Examples 1, 2, and 3 compared to the negative electrode according to the Comparative Example 1.

### Evaluation 3: evaluation of an initial charge/discharge characteristic of a rechargeable lithium battery

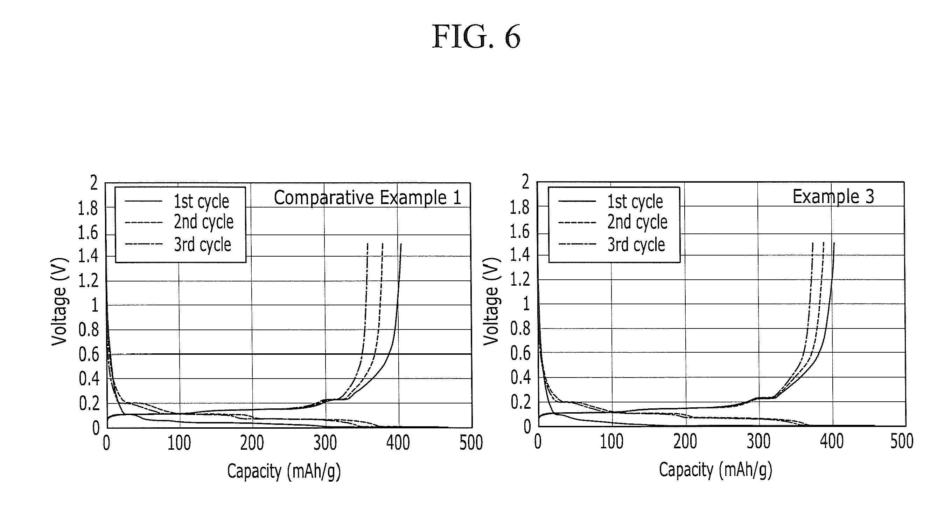

The rechargeable lithium batteries manufactured according to Example 3 and Comparative Example 1 had the cutoff voltage set to 0.005 V (0.01 C), and were subjected to charge at a 0.1 C rate with a CC-CV mode and discharge at a 0.1 C rate up to 1.5 V with a CC mode. Thereafter, the cycle was repeated three times by repeating the charging and the discharging to measure the capacity and efficiency of the rechargeable lithium battery. The results are shown in Table 3 and FIG. 6.

In detail, FIG. 6 is a graph showing charge/discharge curves of 3 initial cycles for a rechargeable lithium battery manufactured according to Example 3 and Comparative Example 1.

**[Table 3]**

| | Example 3 | | Comparative Example 1 | |
|---|---|---|---|---|
| | Discharge capacity (mAh/g) | Initial efficiency (%) | Discharge capacity (mAh/g) | Initial efficiency (%) |
| 1^{st} cycle | 403.5 | 88.5 | 404.4 | 86.8 |
| 2^{nd} cycle | 389.4 | 96.2 | 379.1 | 94.0 |
| 3^{rd} cycle | 374.6 | 95.9 | 358.6 | 94.5 |

Referring to Table 3 and FIG. 6, it may be confirmed that efficiency is increased and capacity retention is improved in the rechargeable lithium battery according to Example 3 compared to the rechargeable lithium battery according to the Comparative Example 1.

The present invention is not limited to the exemplary embodiments, but may be implemented in various different forms. It may be understood by those skilled in the art to which the present invention pertains that the present invention may be implemented as other specific forms without changing the spirit or essential feature thereof. Therefore, it should be understood that the above-mentioned embodiments are not restrictive but are exemplary in all aspects.

**<Description of Symbols>**

| | | | |
|---|---|---|---|
| 100: | rechargeable lithium battery | 112: | negative electrode |
| 113: | separator | 114: | positive electrode |
| 120: | battery container | 140: | sealing member |

## Claims

1. A negative electrode active material for a rechargeable lithium battery, comprising: a carbon-metal complex or a mixture thereof, containing a carbon-based active material including a first ceramic coating layer; and a metal-based active material or a metal-base active material including a first ceramic coating layer; and a carbon-based active material.

2. The negative electrode active material for the rechargeable lithium battery of claim 1, wherein,
in the negative electrode active material containing the carbon-based active material including the first ceramic coating layer, and the metal-based active material,
a second ceramic coating layer positioned on a surface of the metal-based active material is further included.

3. The negative electrode active material for the rechargeable lithium battery of claim 1, wherein,
in the negative electrode active material including the metal-based active material including the first ceramic coating layer and the carbon-based active material,
a second ceramic coating layer positioned on a surface of the carbon-based active material is further included.

4. The negative electrode active material for the rechargeable lithium battery of claim 1, wherein,
in the carbon-based active material including the first ceramic coating layer,
a low crystalline carbon coating layer is positioned on a bottom portion of the first ceramic coating layer.

5. The negative electrode active material for the rechargeable lithium battery of claim 2, wherein the low crystalline carbon coating layer is positioned outside the metal-based active material.

6. The negative electrode active material for the rechargeable lithium battery of claim 5, wherein the low crystalline carbon coating layer is positioned outside the metal-based active material and the second ceramic coating layer is positioned outside the low crystalline carbon coating layer.

7. The negative electrode active material for the rechargeable lithium battery of claim 3, wherein the low crystalline carbon coating layer is positioned outside the carbon-based active material.

8. The negative electrode active material for the rechargeable lithium battery of claim 7, wherein the low crystalline carbon coating layer is positioned outside the carbon-based active material and the second ceramic coating layer is positioned outside the low crystalline carbon coating layer.

9. The negative electrode active material for the rechargeable lithium battery of claim 1, wherein the metal-based active material is selected from a metal selected from the group, consisting of silicon, tin, aluminum, vanadium, magnesium, antimony, or at least one an alloy or combination thereof; a compound selected from a group consisting of an oxide, a nitride, or a carbide of the metal; or a combination thereof.

10. The negative electrode active material for the rechargeable lithium battery of claim 1, wherein the carbon-based active material is a natural graphite, an artificial graphite, a soft carbon, a hard carbon, or a combination thereof.

11. The negative electrode active material for the rechargeable lithium battery of claim 5 or claim 7, wherein
the low crystalline carbon coating layer includes a low crystalline carbon material,
the row crystalline carbon material is petroleum-based pitch, coal-based pitch, mesophase pitch, heavy crude oil, light crude oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

12. The negative electrode active material for the rechargeable lithium battery of claim 1, wherein the ceramic is a metal oxide, a non-metal oxide, a complex metal oxide, a rare earth oxide, a compound containing halogens, an oxide generated from a ceramic precursor, or a combination thereof.

13. The negative electrode active material for the rechargeable lithium battery of claim 12, wherein the ceramic precursor is zirconia, aluminum, polycarbosilane, polysiloxane, polysilazane, or a combination thereof.

14. The negative electrode active material for the rechargeable lithium battery of claim 1, wherein the ceramic is SiO2, Al2O3, Li2Ti5O12, TiO2, Ce02, Zr02, BaTiO3, Y2O3, MgO, CuO, ZnO, AlPO4, AIF, Si3N4, AIN, TiN, WC, SiC, TiC, MoSi2, Fe2O3, GeO2, Li2O, MnO, NiO, zeolite, or a combination thereof.

15. The negative electrode active material for the rechargeable lithium battery of claim 11, wherein a content of the low crystalline carbon material is 0.1 to 30 parts by weight based on 100 parts by weight of the active material.

16. The negative electrode active material for the rechargeable lithium battery of claim 1, wherein an average particle diameter of the carbon-based active material is 5 to 30 µm.

17. The negative electrode active material for the rechargeable lithium battery of claim 1, wherein an average particle diameter of the metal-based active material is 0.05 to 20 µm.

18. The negative electrode active material for the rechargeable lithium battery of claim 1, wherein the first ceramic coating layer contains ceramic particles, and an average particle diameter of the ceramic particles is 10 to 1000 nm.

19. The negative electrode active material for the rechargeable lithium battery of claim 2 or claim 3, wherein the second ceramic coating layer contains ceramic particles, and the average particle diameter of the ceramic particles is 10 to 1000 nm.

20. The negative electrode active material for the rechargeable lithium battery of claim 1, wherein a weight ratio of the carbon-based active material including the first ceramic coating layer and the metal-based active material is 60 to 99:1 to 40 (the carbon-based active material including the first ceramic coating layer to the metal-based active material).

21. The negative electrode active material for the rechargeable lithium battery of claim 1, wherein a weight ratio of the metal-based active material including the first ceramic coating layer and the carbon-based active material is 60 to 99:1 to 40 (the metal-based active material including the first ceramic coating layer to the carbon-based active material).

22. A method for preparing a negative electrode active material for a rechargeable lithium battery, comprising:
preparing a carbon-based active material and a metal-based active material;
coating a surface of each of the carbon-based active material and the metal-based active material with a low crystalline carbon material to form a low crystalline carbon coating layer thereon;
forming a first ceramic coating layer on the surface of the carbon-based active material or the metal-based active material on which the low crystalline carbon coating layer is formed;
mixing the carbon-based active material or the metal-based active material on which the first ceramic coating layer is formed and the carbon-based active material or the metal-based active material on which the low crystalline carbon coating layer is formed; and
obtaining a negative electrode active material for a rechargeable lithium battery of a carbon-metal complex or a mixture type containing the carbon-based active material including the first ceramic coating layer, and the metal-based active material on which the low crystalline carbon coating layer is formed, or the metal-based active material including the first ceramic coating layer, and the carbon-based active material on which the low crystalline carbon coating layer is formed.

23. The method of claim 22, wherein,
between the forming of the first ceramic coating layer on the surface of the carbon-based active material or the metal-based active material on which the low crystalline carbon coating layer is formed, and the mixing of the carbon-based active material or the metal-based active material on which the first ceramic coating layer is formed and the carbon-based active material or the metal-based active material on which the low crystalline carbon coating layer is formed,
forming a second ceramic coating layer on the surface of the metal-based active material or the carbon-based active material on which the low crystalline carbon coating layer is formed is further included.

24. The method of claim 22, wherein,
in the coating of the surface of each of the carbon-based active material and the metal-based active material with the low crystalline carbon material to form the low crystalline carbon coating layer thereon,
the low crystalline carbon material is mixed with each active material, and a mechanical mixing method is performed at a speed of 500 to 3000 rpm.

25. The method of claim 22, wherein,
I the coating of the surface of each of the carbon-based active material and the metal-based active material with the low crystalline carbon material to form the low crystalline carbon coating layer thereon,
a heat treatment process is performed under an atmosphere of hydrogen, nitrogen, argon, or a mixed gas thereof.

26. The method of claim 22, wherein,
in the coating of the surface of each of the carbon-based active material and the metal-based active material with the low crystalline carbon material to form the low crystalline carbon coating layer thereon,
the heat treatment process is performed at 600 to 1500 °C.

27. The method of claim 22, wherein,
in the forming of the first ceramic coating layer on the surface of the carbon-based active material or the metal-based active material on which the low crystalline carbon coating layer is formed,
the mechanical mixing method is used, and the mechanical mixing method is performed by any one among ball milling, mechanofusion milling, shaker milling, planetary milling, attritor milling, disk milling, shape milling, nauta milling, nobilta milling, high speed mixing, or a combination thereof.

28. The method of claim 27, wherein: the mechanical mixing method is performed at a speed of 500 to 7000 rpm.

29. The method of claim 22, wherein,
in the mixing of the carbon-based active material or the metal-based active material on which the first ceramic coating layer is formed and the carbon-based active material or the metal-based active material on which the low crystalline carbon coating layer is formed,
the mixing is performed by any one among ball milling, mechanofusion milling, shaker milling, planetary milling, attritor milling, shape milling, nauta milling, nobilta milling, high speed mixing, paddle mixing, ribbon mixing, henschel mixing, corn type mixing, thinky mixing, homo mixing, agitator mixing, or a combination thereof.

30. The method of claim 29, wherein,
in the mixing of the carbon-based active material or the metal-based active material on which the first ceramic coating layer is formed and the carbon-based active material or the metal-based active material on which the low crystalline carbon coating layer is formed,
the mixing is performed at a speed of 100 to 2000 rpm

31. A rechargeable lithium battery, comprising:
an electrode including an electrode active material for the rechargeable lithium battery according to claim 1; and
an electrolyte.
